# DEMANDE DE BREVET EUROPEEN

(11) **EP 1 486 380 A2**
(43) Date de publication de la demande: **15.12.2004**
(21) Numéro de dépôt: 03358015.0
(22) Date de dépôt: 16.10.2003
(51) Int. Cl.: B60R 9/055

(54) **Coffre de voiture incorporé**

(30) Priorité: 14.11.2002 FR 0214264
(71) Demandeur: Bloch, Christophe, 34280 La Grande Motte (FR)
(72) Inventeur: Bloch, Christophe, 34280 La Grande Motte (FR)

(57) **Abrégé**

L'invention concerne un dispositif de rangement de bagages dans un coffre,faisant partie intégrante de la voiture,et étant de même couleur,de même fabrication que cette dernière

Ce dispositif de rangement permet de mettre sans risque de vol,d'intempérie,les valises nécessaires au voyage Il permet à l'utilisateur de ce coffre,d'avoir une surface de rangement importante àla portée de sa main et en toute sécurité

Les bagages ne seront pas posés directement sur le toit de la voiture,mais sur une galerie fixée sur les parties latérales intérieures du coffre

Le dispositif de ce coffre,selon l'invention est déstiné particulièrement à de longs voyages,libérant ainsi le coffre arrière de la voiture,qui ne dispose pas d'une surface suffisante,mais qui néanmoins peut servir de rangement de dernière minute

## Description

La présente invention a été réalisée en vue d'obtenir un coffre de surface importante et à l'abri du vol.

Ce coffre fera partie intégrante de la voiture,et ne tranchera pas avec le véhicule,car il sera de même couleur et de même fabrication,et ne fera qu'un tout avec ce dernier ce coffre sera situé au dessus du toit et fera partie intégrante de la voiture.

La présente invention a pour objet de créer un espace de rangement de valises, à l'intérieur de ce coffre, permettant des chargements bien centrés.

Ces bagages placés à l'intérieur du coffre,ne seront pas mis directement sur le toit,mais des supports seront fixés,et bien entendu soudés aux parties latérales,situées à l'intérieur du coffre,afin qu'une galerie puisse y être fixée.

Les portes basculantes latérales,situées d'un côté et de l'autre du coffre,s'ouvriront juste au dessus de la galerie.

Cet espace de rangement aura l'avantage d'occuper la totalité de la dimension du toit de la voiture,et n'excèdera pas les hauteurs règlementaires.

l'ouverture de ce coffre sera constituée par deux portes basculantes latérales permettant d'y déposer les bagages.

En cas d'intempéries,les bagages seront donc bien protégées.

Le coffre comportera un nombre de bagages amplement suffisant à des déplacements,où pour partir en vacances.

Cette invention présentera l'avantage de libérer le coffre arrière de la voiture,et permettra d'entreposer dans ce dernier des petits bagages indispensables aux nécéssitées du voyage, ainsi que des achats de dernière minute.

Le grand avantage aussi de cette invention sera que le dispositif anti-vol dissuadera tout voleur,car un système d'alarme sera 30 placé à l'intérieur du coffre.

D'autre part, ce coffre pourra être blindé intèrieurement à la demande du client.

Afin que le système anti-vol soit complètement sécurisé, il sera posé deux serrures de haute sécurité,d'un côté et de l'autre des fermetures du coffre

Les déssins produits dans la déscription de ce coffre permettront aisément de comprendre cette invention par des figures appropriées à celles-ci

Ces figures donc illustrent l'invention chacune de celles-ci seront détaillées et numérotées,afin que les parties intèrieures et extèrieures du coffre soient bien explicites

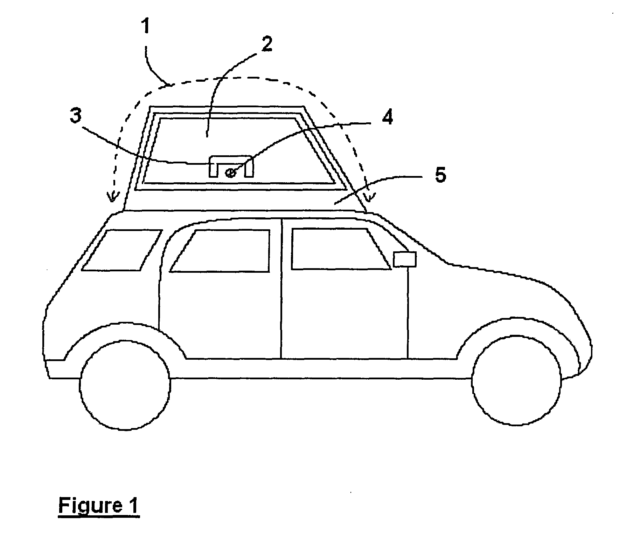

La FIG 1 represente la totalité du coffre faisant partie intégrante de la voiture

Ce coffre,comme je l'ai déjà expliqué précedemment sera de même couleur et de même fabrication que cette voiture,et ne fera qu'un tout avec elle

Dans la FIG 1,les différentes parties du coffre seront comme dans les figures suivantes representées par des numéros

Détail de la première figure:le numéro 1 represente la totalité du coffre faisant partie intégrante de la voiture

Le numéro (2)est la porte basculante de l'ouverture du coffre

Bien evidemment,la porte basculante du coffre existera aussi de l'autre côté de la voiture,permettant l'accés au coffre des deux côtés du véhicule

Le numéro (3)n'est autre que la poignée d'ouverture du coffre

Ces descriptions seront les mêmes de l'autre côté du coffre

Le numéro 4 represente la serrure de haute sécurité du coffre le numéro (5)represente la partie basse du coffre faisant partie intégrante de la voiture,et étant de même fabrication, et de même couleur,comme je l'ai dit précèdemment

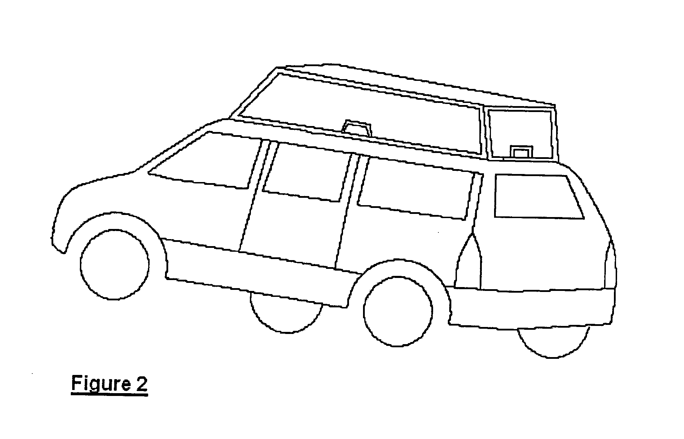

FIG 2,le numéro (6)de cette figure represente une porte basculante avec sa poignée d'ouverture

Cette porte basculante sera situé à l'arrière du véhicule

Nous l'avons ajouté pour des voitures comme les Breaks

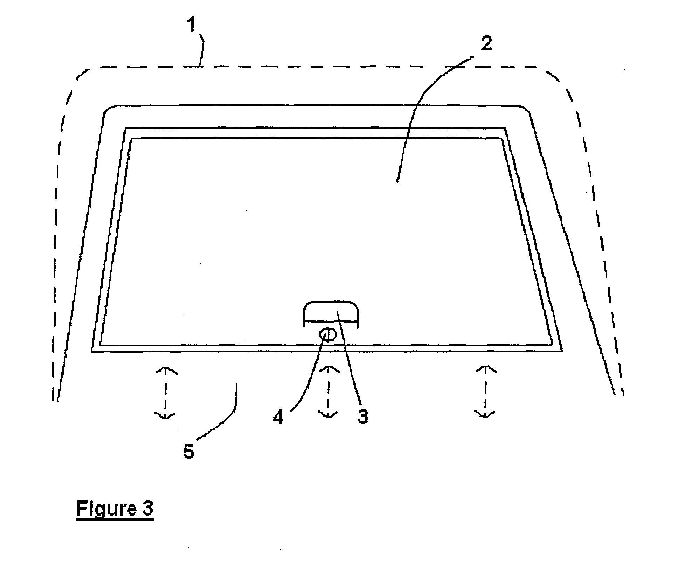

FIG 3,numéro (1)Ensemble du coffre
numéro (2)La porte basculante
numéro (3)Poignée de la porte basculante
numéro (4)Sérrure de sécurité
numéro (5)Partie basse du coffre faisant partie intégrante de la voiture

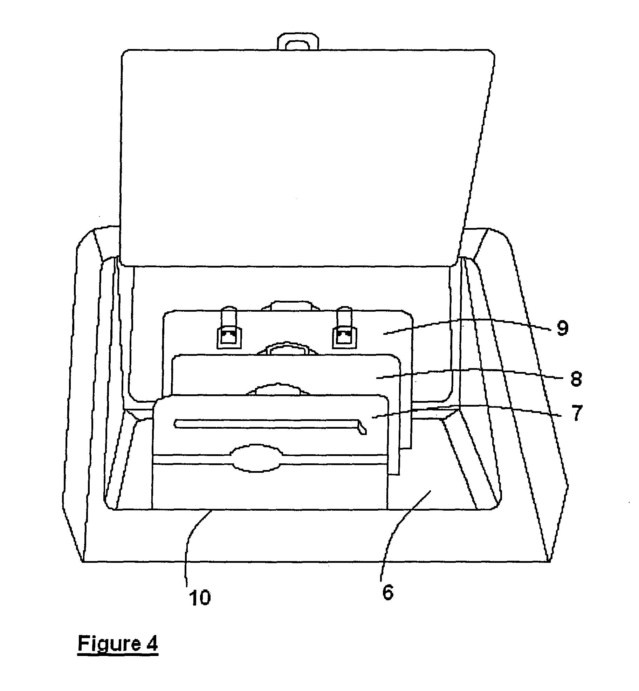

FIGURE 4,numéro 6 Galerie intérieure du coffre
Les numéros (7),(8),(9)représentent les valises posées sur la galerie
numéro (10) Partie où la porte basculante se rabat

Figure 5,le numéro (11) représente la seconde porte basculante situéé de l'autre côté du coffre

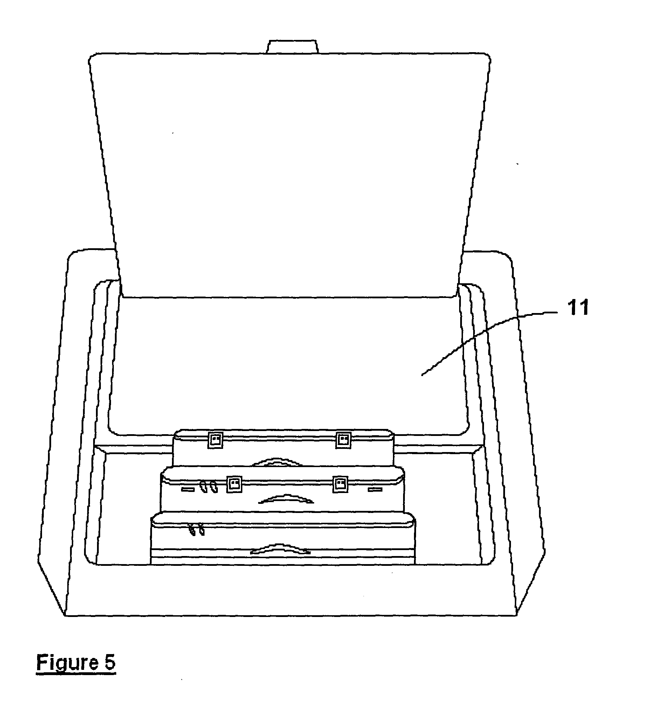

sur la FIGURE 5,nous representons les valises rangées dans le coffre de la voiture

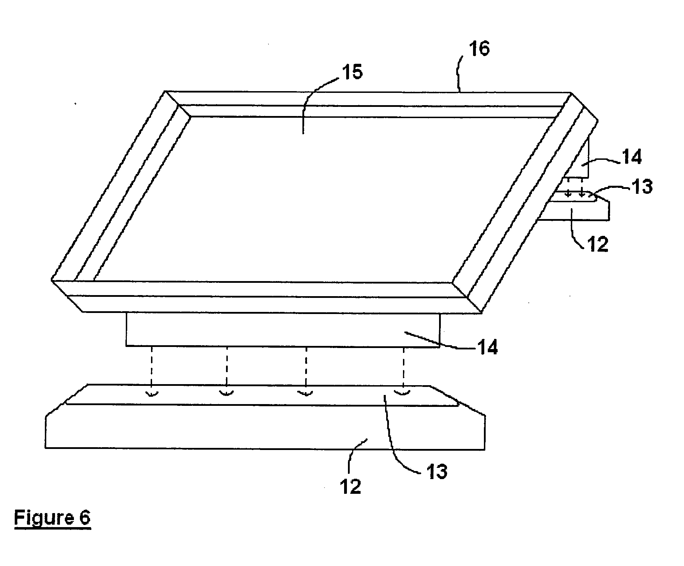

FIGURE 6,numéro(12)représente les supports qui seront fixés et aussi soudés d'un côté et de l'autre des parties latérales intèrieures du coffre
numéro (13) partie des supports où s'encastrera la galerie
numéro (14) Partie de la galerie qui s'encastre dans les supports numéro (13)
numéro (15) Fond intérieur de la galerie où seront posées les valises
numéro (16) Pourtour de la galerie

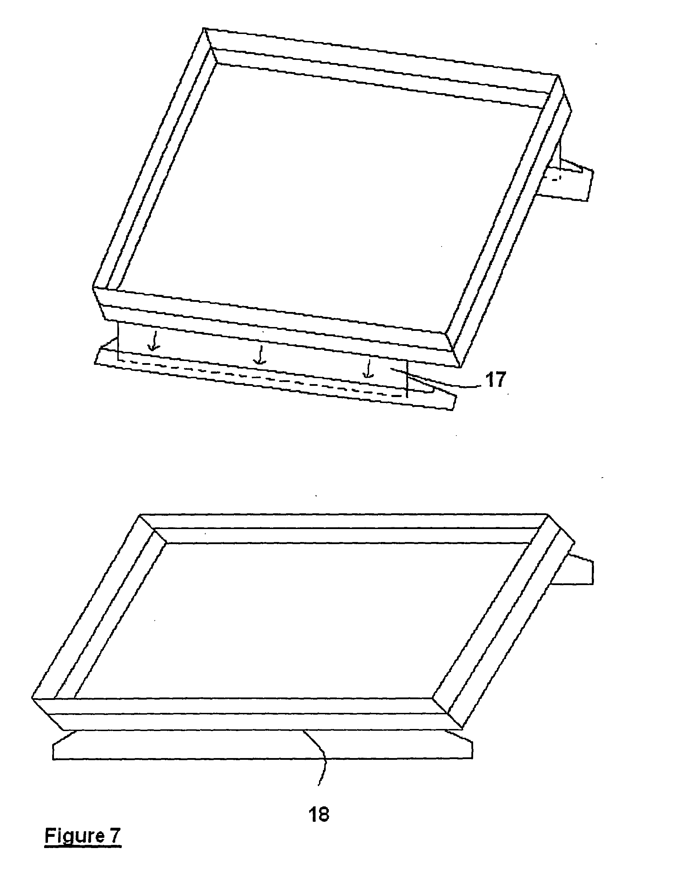

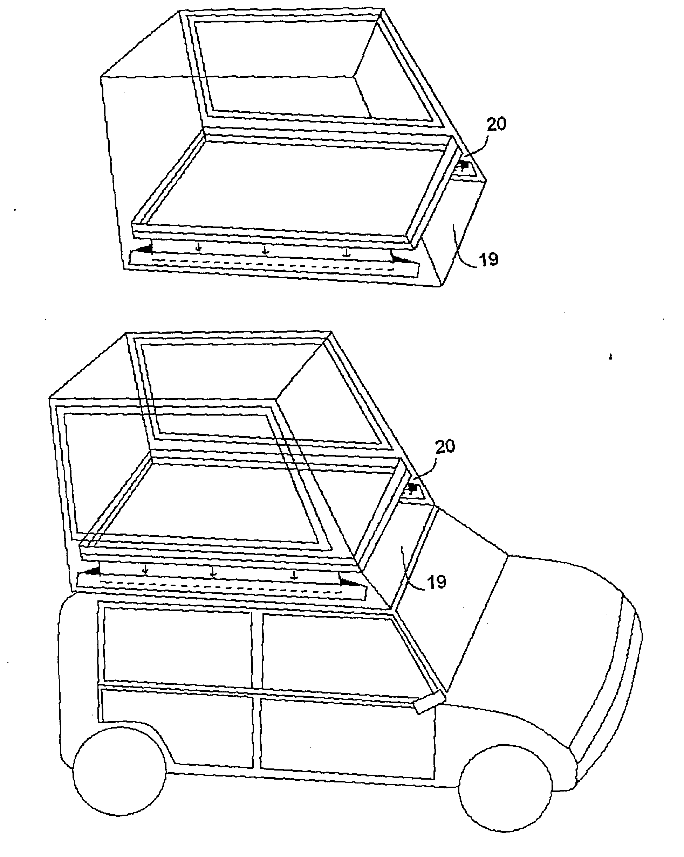

FIGURE 7,le numéro (17)represente la partie de la galerie qui s'enclenche dans le support,il en est de même de l'autre côté
le numéro (18)represente la partie de la galerie une fois enclenché dans les supports

## Revendications

1. Coffre 1 adapté à un véhicule,
**caractérisé en ce qu'**il est dépourvu de fond, la fonction de ce fond étant assurée par le toit dudit véhicule.

2. Coffre selon la revendication 1, **caractérisé en ce qu'**il comporte deux portes basculantes 2, 11 situées sur un de ses côtés et sur un autre de ses côtés.

3. Coffre selon l'une quelconque des revendications 1 ou 2, **caractérisé en ce qu'**il comporte des supports 12 qui sont fixés à ses parties latérales.

4. Coffre selon la revendication 3, **caractérisé en ce qu'**il comporte une galerie intérieure 6 fixée sur lesdits supports.

5. Coffre selon la revendication 4, **caractérisé en ce que** la fixation de ladite galerie 6 sur lesdits supports 12 est réalisée à l'aide de moyens d'encastrement 14-13, 17.

6. Coffre selon l'une quelconque des revendications 2 à 5, **caractérisé en ce que** lesdites portes basculantes 2, 11 sont munies de serrures 4.

7. Coffre selon l'une quelconque des revendications précédentes, **caractérisé en ce qu'**il est muni d'un système d'alarme.

8. Coffre selon l'une quelconque des revendications précédentes, **caractérisé en ce qu'**il est muni d'un blindage.

9. Véhicule **caractérisé en ce qu'**il est pourvu d'un coffre selon l'une quelconque des revendications précédentes.

10. Véhicule selon la revendication 9, **caractérisé en ce que** ledit coffre en est une partie intégrante.
